# EUROPÄISCHE PATENTSCHRIFT

(11) **EP 4 099 007 B1**
(45) Veröffentlichungstag und Bekanntmachung des Hinweises auf die Patenterteilung: **08.10.2025**
(21) Anmeldenummer: 22173543.4
(22) Anmeldetag: 16.05.2022
(51) Int. Cl.: G01N 27/83

(54) **POLSCHUH FÜR MAGNETISIERUNGSEINRICHTUNG SOWIE DEREN VERWENDUNG**
POLE PIECE FOR MAGNETIZING DEVICE AND ITS USE
PIÈCE POLAIRE POUR DISPOSITIFS DE MAGNÉTISATION, AINSI SON UTILISATION

(30) Priorität: 31.05.2021 DE 102021205505
(43) Veröffentlichungstag der Anmeldung: 07.12.2022
(73) Patentinhaber: Institut Dr. Foerster GmbH & Co. KG, 72766 Reutlingen (DE)
(72) Erfinder: Eibofner, Frank, 72116 Mössingen (DE); Hecker, Friedrich, 72770 Reutlingen (DE)
(74) Vertreter: Patentanwälte Ruff, Wilhelm, Beier, Dauster & Partner mbB

(56) Entgegenhaltungen:
- CN-A- 106 767 368
- DE-A1- 3 832 034
- DE-A1- 3 841 747
- US-A1- 2013 057 269
- US-A1- 2016 380 491
- US-A1- 2021 072 186

## Beschreibung

### ANWENDUNGSGEBIET UND STAND DER TECHNIK

Die Erfindung betrifft einen Polschuh zur Verwendung an einer Magnetisierungseinrichtung zur Magnetisierung eines Prüfvolumens eines Prüfguts in einer Prüfvorrichtung zur Streuflussprüfung von ferromagnetischem Prüfgut mit einer im Wesentlichen kreiszylindrischen Oberfläche zum Nachweis von Defekten, insbesondere zur Prüfung von ferromagnetischen Rohren. Weiterhin betrifft die Erfindung eine Prüfvorrichtung, die mindestens einen solchen Polschuh aufweist. Eine solche Prüfvorrichtung weist einen Prüfkopf mit wenigstens einer Prüfsonde zum Abtasten der Oberfläche des Prüfguts zur Erfassung von durch Defekte verursachten magnetischen Streufeldern auf. Die Magnetisierungseinrichtung ist dazu ausgebildet, im Bereich des Prüfkopfs eine Magnetisierung des Prüfguts zu erzeugen.

Prüfgut mit einer "im Wesentlichen" kreiszylindrischen Oberfläche hat nominell eine mathematisch exakt kreiszylindrische Oberfläche oder Mantelfläche. "Im Wesentlichen kreiszylindrisch" bedeutet, dass im Rahmen von Fertigungstoleranzen Abweichungen von der exakten Kreiszylinderform vorliegen können, dass aber gleichwohl die Oberfläche weitgehend kreiszylindrisch ist. Insbesondere gelten weitgehend kreiszylindrische Oberflächen mit Durchmesservariationen bis zu maximal 2% des Durchmessers inklusive Ovalität als "im Wesentlichen kreiszylindrisch".

Die Prüfvorrichtung ist dafür ausgelegt, dass die Prüfvorrichtung und das Prüfgut in einem Prüfbetrieb eine Relativbewegung parallel zu einer Durchlaufachse ausführen. Dazu kann die Prüfvorrichtung stationär angeordnet sein, während das Prüfgut durch die Prüfvorrichtung hindurchläuft. Alternativ kann z.B. die Prüfvorrichtung axial (parallel zur Durchlaufachse) bewegt werden, während das Prüfgut sich nicht in Axialrichtung bewegt. In jedem Fall kann das Prüfgut über eine große Länge geprüft werden, ggf. kontinuierlich.

Magnetische Streuflussverfahren sind bei der zerstörungsfreien Prüfung von Halbzeug und Fertigteilen auf Defekte eine wichtige Komponente zur Qualitätsüberwachung sowohl im Herstellungsprozess als auch bei der zyklisch wiederkehrenden Prüfung der Fertigteile. Magnetische Streuflussverfahren sind gegenüber einigen störenden Eigenschaften der Werkstoffe, wie beispielsweise Rauheit der Oberfläche oder Zunderbelag bei warmgewalzten Produkten, weniger empfindlich als beispielsweise das Wirbelstromverfahren oder die Ultraschallprüfung.

Dadurch ergibt sich ein besseres Verhältnis zwischen Nutzsignal und Störsignal (N/S-Verhältnis), wodurch eine zuverlässigere Fehlererkennung ermöglicht wird.

Bei einer Prüfvorrichtung zum Detektieren von Defekten mittels Streuflussmessung wird ein Prüfvolumen des Prüflings mittels einer Magnetisierungseinrichtung magnetisiert und mit Hilfe mindestens einer magnetfeldempfindlichen Prüfsonde (Streuflusssonde) zur Erfassung von durch die Defekte verursachten magnetischen Streufeldern abgetastet. Die Magnetisierung kann mit magnetischem Gleichfeld (DC) oder mit magnetische Wechselfeld (AC) erreicht werden. Bei der Prüfung findet eine Relativbewegung zwischen der Sonde und der Oberfläche des Prüfguts in einer Abtastrichtung entlang einer Prüfspur statt. Bei der Abtastung wird die Sonde in einem relativ kleinen, aber endlichen Prüfabstand zur Oberfläche des Prüfguts gehalten.

Bei sogenannten rotierenden Systemen ist die Prüfvorrichtung dafür ausgelegt, dass der Prüfkopf und die Magnetisierungseinrichtung um die Durchlaufachse rotieren. Das Prüfgut rotiert dann vorzugsweise nicht um seine Längsmittelachse. Eine relative Rotation kann auch dadurch erreicht werden, dass das Prüfgut um seine Längsmittelachse rotiert, wobei dann der Prüfkopf und die Magnetisierungseinrichtung nicht rotieren.

Bei der Fehlerprüfung von ferromagnetischem Halbzeug mit der DC-Streuflussmethode, im speziellen mit einem rotierenden System, wird das zu prüfende Material (Prüfgut) zwischen zwei magnetische Pole eines Elektromagneten gebracht. Durch die magnetische Leitfähigkeit des Prüflingsmaterials (µM>>1) ergibt sich im Material eine Magnetisierung, die z.B. zwischen 0.5 T und 2 T liegen kann. Die Sensorelemente im Prüfkopf messen die Magnetisierung in Luft (µL=1) einige zehntel Millimeter bis ca. 2 mm über der Oberfläche des Prüfgutes. In fehlerhaftem Material wird der magnetische Fluss im Material gestört und tritt aus dem Material aus. Dadurch ändert sich die Magnetisierung nach Betrag und Richtung am Ort des Prüfkopfs, so dass die Sensorelemente ein Signal detektieren können. Die Höhe des Signals hängt dabei vom Verhältnis der beiden magnetischen Leitfähigkeiten (Arbeitspunkt), der Form und Lage der Fehler (Innen- oder Außenfehler, Schräg- oder Längsfehler) und der Homogenität der Magnetisierung im Material ab.

Eine Magnetisierungseinrichtung weist Polschuhe auf, die für die Einleitung des Magnetisierungsfeldes in das Prüfgut und die Ausleitung aus dem Prüfgut konfiguriert sind. In der Regel handelt es sich um auswechselbare dimensionsabhängige Komponenten, die eine Anpassung der Prüfvorrichtung an unterschiedliche Prüfgutdurchmesser ermöglichen. Ein Polschuh weist einen aus magnetisch leitendem, insbesondere ferromagnetischen Material bestehenden Polschuhkörper auf, an dem eine an die Oberfläche des Prüfguts angepasste Feldaustrittsfläche ausgebildet ist. Der Polschuh ist so gestaltet, dass er das Prüfgut entlang einer parallel zur Durchlaufrichtung gemessenen axialen Länge (Polschuhlänge) über einen in Umfangsrichtung des Prüfguts gemessenen Umschlingungswinkel umschlingen kann und dabei im Prüfbetrieb zwischen der Feldaustrittsfläche und der Oberfläche des Prüfguts ein Luftspalt mit einer radial zur Durchlaufachse gemessenen Luftspaltdicke verbleibt.

Die DE 10 2014 212 499 A1 der Anmelderin beschreibt im Zusammenhang mit der dortigen Fig. 1 beispielhaft eine Prüfvorrichtung mit einem rotierenden Teilsystem, das einen Rotierkopf mit einem um das Prüfgut herum rotierenden Ringjoch aufweist, welches Teil der Magnetisierungseinrichtung ist und an diametral gegenüberliegenden Stellen radial zur Prüflingsoberfläche ausgerichtete Polschuhe aufweist, an denen Magnetisierungswicklungen angebracht sind. Die dem Prüfgut zugewandten Feldaustrittflächen sind konkav kreiszylindrisch gekrümmt, so dass sich idealerweise eine in Axialrichtung und in Umfangsrichtung gleichmäßige Luftspaltdicke ergibt. Der Prüfkopf weist ein Sonden-Array mit einer parallel zur Durchlaufrichtung orientierten Reihe relativ kleiner magnetfeldempfindlichen Prüfsonden auf, die eine hohe örtliche Auflösung ermöglichen. Die Anmeldung offenbart weiterhin eine besondere Auswertung, um hochauflösende Streuflussprüfungen auf Fehler unterschiedlichen Fehlertyps zu ermöglichen, wobei ein besonderes Augenmerk auf schwer zu detektierende Schrägfehler gelegt wird.

Die DE 38 41 747 A1 offenbart eine Magnetisiervorrichtung für zerstörungsfreie Werkstoffprüfung von Werkstücken durch das Magnetpolverfahren auf Oberflächenfehler, insbesondere auf Längsfehler. Die Magnetisiervorrichtung ist mit einer oder mehreren stromdurchflossenen und im Werkstück ein Magnetfeld erzeugenden Spulen versehen. Die Vorrichtung weist nach Art eines Stators beziehungsweise Rotors bei Elektromotoren oder Generatoren eine Gruppe von Bauteilen auf, die aus zu ihrer Längsachse umlaufend oder sternförmig angeordneten ferromagnetischen Polkernen als auch auf diese aufgebrachten Spulen bestehen, durch welche ein innen gelegenes Werkstück umfasst ist beziehungsweise welche von einem außen gelegten Werkstück umfasst wird und durch diese Bauteilgruppe ein vorzugsweise umlaufendes, auf die Werkstückoberfläche einwirkendes Magnetfeld berührungslos erzeugt wird.

### AUFGABE UND LÖSUNG

Der Erfindung liegt die Aufgabe zugrunde, eine Streuflussprüfung zu ermöglichen, die nochmals verbesserte Reproduzierbarkeit von Prüfergebnissen bietet, insbesondere auch für Schrägfehler.

Zur Lösung dieser Aufgabe stellt die Erfindung einen Polschuh mit den Merkmalen von Anspruch 1 sowie eine mit wenigstens einem solchen Polschuh ausgestattete Prüfvorrichtung mit den Merkmalen von Anspruch 6 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Erfinder haben erkannt, dass die aus dem Stand der Technik bekannte Geometrie von Polschuhen systematische Schwächen aufweist, die sich insbesondere beim Nachweis von Schrägfehlern nachteilig bemerkbar machen können. Die Erfindung schlägt deutliche Abweichungen von den bisherigen Auslegungsprinzipien vor, um diese Mängel zu beheben.

Insbesondere wurde erkannt, dass die Reproduzierbarkeit der Messungen für Schrägfehler verbessert werden kann, wenn das Magnetfeld an der Position des Prüfkopfs hinreichend gut bzw. besser als bisher homogenisiert wird. Diese Homogenisierung des Magnetfelds, also eine möglichst weitgehende Vergleichmäßigung der magnetischen Flussdichte nach Betrag und Richtung an der Position des Prüfkopfs, kann durch Veränderung der Polschuhgeometrie erreicht werden. Zum einen kann die Umschlingung in Axialrichtung variiert werden. Alternativ oder zusätzlich kann die Feldaustrittsfläche des Prüfkopfs so ausgelegt werden, dass sich im Prüfbetrieb eine Variation der Luftspaltdicke in Axialrichtung ergibt.

Gemäß einer Formulierung wird dies bei einem gattungsgemäßen Polschuh z.B. dadurch erreicht, dass die Feldaustrittsfläche des Polschuhs eine nicht-konkavzylindrische Gestalt aufweist, die von einer konkavzylindrischen Referenzfläche derart abweicht, dass ein radialer Abstand der Feldaustrittsfläche von einer Krümmungsachse der Referenzfläche in Axialrichtung des Polschuhs variiert. Diese Variation muss außerhalb der durch Fertigungstoleranzen ohnehin üblichen kleinen Variationen liegen. Die Axialrichtung des Polschuhs ist diejenige Richtung, die bei einem gebrauchsfertig in eine Prüfvorrichtung montierten Polschuh parallel zur Durchlaufrichtung bzw. zur Prüfvorrichtungsachse verläuft. Dieser Ansatz kann wie folgt verstanden werden. Konventionell werden Polschuhe so ausgelegt, dass die Feldaustrittsfläche eine konkavzylindrische Gestalt hat. Die Feldaustrittsfläche fällt dann über die gesamte Fläche mit einer konkavzylindrischen Referenzfläche zusammen, deren Krümmungsachse im Prüfbetrieb möglichst gut mit der Durchlaufachse bzw. mit der Prüfvorrichtungsachse der Prüfvorrichtung bzw. mit der Mittellängsachse des durchlaufenden Prüfguts zusammenfallen sollte. Der radiale Abstand der Feldaustrittsfläche von dieser Krümmungsachse ist in dieser konventionellen Konfiguration in Axialrichtung über die gesamte Feldaustrittsfläche gleichmäßig und ist dabei um die Luftspaltdicke größer als der Außenradius des Prüfguts. Der radiale Abstand der Feldaustrittsfläche von der Krümmungsachse der Referenzfläche kann auch als Polschuhradius bezeichnet werden. Dieser wird bei der Auslegung von Polschuhen so bemessen, dass ein Polschuh für Prüfgut aus einem bestimmten Außendurchmesserbereich hinreichend gute Magnetisierung erbringt. Die Luftspaltdicken liegen in der Regel im Bereich von 5 mm bis 25 mm.

Es hat sich als zweckmäßig herausgestellt, diese konventionelle Art der Auslegung der Polschuhgeometrie aufzugeben. Stattdessen sollte die Feldaustrittsfläche des Polschuhs eine nicht-konkavzylindrische Gestalt erhalten, die von einer konkavzylindrischen Referenzfläche derart abweicht, dass ein radialer Abstand der Feldaustrittsfläche von einer Krümmungsachse der Referenzfläche, also der Polschuhradius, in Axialrichtung des Polschuhs variiert. Dadurch ergibt sich im Prüfbetrieb eine entsprechende Luftspaltvariation in Axialrichtung, also eine Variation der Luftspaltdicke in Abhängigkeit von der axialen Position eines Orts parallel zur Durchlaufrichtung. Dadurch kann die Feldverteilung der Magnetisierung günstig beeinflusst werden, um bei gegebener Position des Prüfkopfs die Homogenität des Magnetisierungsfelds am Ort des Prüfkopfs im Vergleich zu herkömmlichen Lösungen zu verbessern.

Alternativ oder zusätzlich ist gemäß dem Vorschlag der Erfindung vorgesehen, dass der Umschlingungswinkel in Axialrichtung des Polschuhs variiert. Auch hier ist die Variation deutlich außerhalb von Fertigungstoleranzen.

Vorzugsweise werden beide Maßnahmen kombiniert, so dass bei bevorzugten Weiterbildungen sowohl eine Luftspaltvariation bzw. eine Variation des Polschuhradius vorliegt als auch eine Umschlingungsvariation. Dadurch werden die positiven Auswirkungen weniger abhängig von der Drehzahl der relativen Rotation und, bei Rohren, von der Wanddicke.

Bei manchen Weiterbildungen ist vorgesehen, dass der radiale Abstand der Feldaustrittsfläche von der Krümmungsachse der Referenzfläche in Axialrichtung des Prüfkopfs derart variiert, dass der radiale Abstand in einem Mittelbereich zwischen axialen Endbereichen der Feldaustrittsfläche größer ist als in den axialen Endbereichen. Damit wird der Luftspalt im Mittenbereich größer (größere Luftspaltdicke) als in den axialen Endbereichen.

Alternativ oder zusätzlich kann vorgesehen sein, dass der Umschlingungswinkel in einem Mittelbereich zwischen den axialen Endbereichen der Feldaustrittsfläche kleiner ist als in den axialen Endbereichen

Vorzugsweise werden beide Maßnahmen kombiniert. Wenn die Umschlingung bzw. der Umschlingungswinkel in den axialen Endbereichen größer als im Mittelbereich ist, ergibt sich im Vergleich zu einem Polschuh mit gleichmäßiger Umschlingung in Axialrichtung eine relative Anhebung der Magnetisierung in den axialen Endbereichen, was einem beobachteten Abfall der Magnetisierung bei konventionellen Polschuhen entgegenwirkt. Die Variation des Luftspalts im Sinne einer Vergrößerung des Luftspalts in der Mitte des Polschuhs im Vergleich zu den axialen Enden führt dazu, dass sich das Magnetfeld in der Mitte im Vergleich zu konventionellen Ansätzen verringert, weil der Luftspalt dort größer ist als an den axialen Enden. Dadurch kann die Magnetisierung im axialen Mittelbereich gegenüber herkömmlichen Lösungen abgesenkt werden. Zusammen mit der tendenziellen Erhöhung der Magnetisierung an den axialen Enden durch die dort größeren Umschlingungswinkel ergibt sich durch die Kombination aus Umschlingungsvariation und Luftspaltvariation eine signifikant bessere Homogenität des Magnetfelds über eine größere Länge des Prüfguts insbesondere auch am Ort des Prüfkopfs.

Das Ausmaß der Luftspaltvariation bzw. der Variation des Polschuhradius und/oder das Ausmaß der Umschlingungsvariation kann auf Basis von Versuchen und/oder auf Basis von Magnetfeldberechnungen bzw. Simulationen optimiert werden. Die Erfinder haben herausgefunden, dass es für die meisten Anwendungsfälle vorteilhaft und ausreichend sein kann, wenn der Umschlingungswinkel zwischen einem minimalen Umschlingungswinkel Uₘᵢₙ und einem maximalen Umschlingungswinkel Uₘₐₓ variiert und eine Umschlingungsvariation größer als 5° und/oder kleiner als 35° ist. Der Begriff "Umschlingungsvariation" (UV) bezeichnet hierbei die Differenz zwischen maximalem Umschlingungswinkel und minimalem Umschlingungswinkel, also UV = Uₘₐₓ - Uₘᵢₙ. In der Regel ist die homogenisierende Wirkung der Umschlingungsvariation nicht groß genug, wenn die Umschlingungsvariation deutlich unterhalb von 5° liegt. Bei einer Umschlingungsvariation deutlich oberhalb von 35° kann es dagegen sein, dass der Umschlingungswinkel im Bereich minimaler Umschlingung zu klein wird, so dass dynamische Effekte die erwünschte Wirkung konterkarieren können.

Zum besseren Verständnis sei noch Folgendes erläutert. Simulationen der Erfinder haben gezeigt, dass zusätzlich zur statischen Magnetisierung des Materials durch zwei Polschuhe bei einem rotierenden Magnetisierungssystem auch Magnetisierungseffekte aufgrund von induzierten Strömen berücksichtigt werden sollten. Beim Übergang des Magnetfelds von einem Polschuh in das Prüfgut bei gleichzeitiger relativer Drehung zwischen Polschuh und Prüfgut werden in Bereichen des Prüfguts mit sich ändernden Magnetfeldern elektrische Ströme induziert, die umso stärker sind, je größer die Magnetfeldänderung und je kürzer die Zeit ist, in der sich das Magnetfeld ändern muss. Diese Ströme erzeugen Magnetfelder, die dem ursprünglichen Magnetfeld entgegenwirken und zu einer Verzerrung bzw. einer Verschiebung der Magnetisierung führen können. Die Zeit, die das Magnetfeld im Prüfgut hat, um sich zu ändern, ist einerseits abhängig von der Rotationsgeschwindigkeit und andererseits von der Umschlingung. Die Rotationsgeschwindigkeit ist ein Prozessparameter, der durch entsprechende Einstellungen während der Prüfung beeinflusst werden kann. Die Umschlingung ist dagegen ein Parameter, der am Polschuh festzulegen ist. Die hier genannten, durch induzierte Ströme verursachten ungewollten Gegeneffekte lassen sich begrenzen, wenn die Unterschiede zwischen maximaler und minimaler Umschlingung nicht zu groß werden.

Auch für die Variation des Luftspalts bzw. des Polschuhradius wurden durch aufwendige Simulationen besonders günstige Bereiche identifiziert. Danach erscheint es vorteilhaft, wenn der radiale Abstand der Feldaustrittsfläche von der Krümmungsachse der Referenzfläche zwischen einem minimalen Radius RFAₘᵢₙ und einem maximalen Radius RFAₘₐₓ variiert und eine Radiendifferenz ΔRFA = RFAₘₐₓ - RFAₘᵢₙ größer als 2 mm und/oder kleiner als 40 mm ist und/oder dass die Radiendifferenz zwischen 5 % und 40 % des Minimalradius RFAₘᵢₙ beträgt.

Werden diese Bedingungen eingehalten, so lassen sich in der überwiegenden Anzahl praktisch relevanter Fälle die erwünschten Homogenisierungseffekte erreichen, ohne unerwünschte Nebeneffekte, wie zum Beispiel eine zu geringe Magnetisierung bei zu großer Luftspaltdicke, befürchten zu müssen.

Die Radiendifferenz ΔRFA entspricht im Prüfbetrieb der Luftspaltvariation.

Ein weiterer Beitrag zu einer guten Homogenisierung des Magnetfelds am Ort des Prüfkopfs kann gemäß einer Weiterbildung dadurch erreicht werden, dass die Feldaustrittsfläche einen maximalen Umschlingungswinkel von mehr als 90° aufweist, wobei der maximale Umschlingungswinkel vorzugsweise im Bereich von 100° bis 160° liegen kann. Damit wird der Erkenntnis Rechnung getragen, dass es prinzipiell günstig für die Homogenisierung erscheint, den Umschlingungswinkel so groß wie möglich zu gestalten. Andererseits wird Platz zur Unterbringung von Prüfköpfen benötigt. In den angegebenen Winkelbereichen sind gute konstruktive Lösungen möglich.

Der Verlauf der Umschlingung in Axialrichtung kann so sein, dass die Umschlingung kontinuierlich mit der Axialposition variiert. Dies ist jedoch nicht zwingend. In manchen Fällen gibt es Abschnitte mit konstantem Umschlingungswinkel, die nach Übergang in einen Abschnitt mit geringerem Umschlingungswinkel übergehen. Übergänge zwischen Bereichen größerer Umschlingungswinkel und kleinerer Umschlingungswinkel können kontinuierlich bzw. glatt verlaufen. Dies ist jedoch nicht zwingend. Die Übergänge können auch stufenartig sein, so dass Abschnitte unterschiedlicher, ggf. konstanter Umschlingungswinkel aneinander anschließen. Zwischen Abschnitten unterschiedlicher Umschlingungswinkel können schräge Übergangsbereiche vorliegen. Entsprechendes gilt auch für die Auslegung der Gestalt der Feldaustrittsfläche hinsichtlich der gewünschten Luftspaltvariation.

Die Erfindung betrifft auch eine Prüfvorrichtung der eingangs erwähnten Art. Die Magnetisierungseinrichtung weist radial zur Prüflingsoberfläche ausgerichtete Polschuhe auf, um das Magnetfeld einzuleiten und aus dem Prüfgut wieder abzuleiten. Durch die Verwendung wenigstens eines Polschuhs gemäß der beanspruchten Erfindung kann die Homogenität des Magnetisierungsfeldes am Ort des Prüfkopfs verbessert werden.

Bevorzugte Prüfvorrichtungen weisen einen um das Prüfgut herum rotierbaren Rotierkopf auf, der die Magnetisierungseinrichtung trägt. Diese hat an diametral gegenüberliegenden Stellen radial zur Prüflingsoberfläche ausgerichtete Polschuhe mit dem Prüfgut zuzuwendenden Feldaustrittsflächen. Die Magnetisierungseinrichtung hat vorzugsweise genau zwei Polschuhe, die einander rotationssymmetrisch zur Durchlaufachse diametral gegenüberliegen. Die Polschuhe können über ein Ringjoch verbunden sein, um einen wirkungsvollen magnetischen Schluss herzustellen.

Eine relative Rotation zwischen Magnetisierungseinrichtung/Prüfkopf einerseits und Prüfgut andererseits kann auch bei einer Prüfvorrichtung ohne Rotierkopf realisiert werden, indem das Prüfgut um seine Längsmittelachse rotiert wird.

Um den Einfluss der relativen Rotation zwischen Prüfkopf/Magnetisierungseinrichtung und Prüfgut auf die örtliche Verteilung des Magnetisierungsfeldes im Prüfgut zu optimieren, hat es sich als vorteilhaft herausgestellt, wenn der Prüfkopf nicht symmetrisch zwischen den Polschuhen angeordnet ist, sondern in Umfangsrichtung asymmetrisch. Ein Asymmetriewinkel zwischen einer senkrecht zu einer diametralen Verbindungslinie der Polschuhe liegenden axialen Schnittebene und dem Prüfkopf kann zum Beispiel im Bereich von 5° bis 15° liegen.

Obwohl ein Prüfkopf mit einer einzigen Prüfsonde ausgestattet sein kann, umfassen bevorzugte Prüfköpfe mehrere Prüfsonden, die eine effizientere Prüfung ermöglichen. Vorzugsweise weist der Prüfkopf ein Sonden-Array mit einer Vielzahl von magnetfeldempfindlichen Prüfsonden auf, die in einer parallel zur Durchlaufrichtung verlaufenden Axialrichtung nebeneinander angeordnet sind und dadurch eine effektive Prüfkopflänge definieren. Die effektive Prüfkopflänge wird nachfolgend auch vereinfachend als "Prüfkopflänge" bezeichnet und entspricht der Länge des magnetfeldempfindlichen Bereichs des Prüfkopfs in Axialrichtung. Wenn über diese Prüfkopflänge viele relativ kleinflächige Prüfsonden verteilt sind, ergibt sich eine hohe Ortsauflösung in Kombination mit einer hohen Prüfeffizienz, da viele nebeneinanderliegende, vorzugsweise einander überlappende Prüfspuren der einzelnen Prüfsonden zeitgleich abgetastet werden. Bevorzugte Varianten und deren Auswertungen sind zum Beispiel in der oben genannten DE 10 2014 212 499 A1 beschrieben, deren Offenbarungsgehalt insoweit zum Inhalt der Beschreibung gemacht wird.

Um zu erreichen, dass auch im Bereich der axialen Enden des Prüfkopfs bzw. in den Bereichen, die durch die in diesen Endbereichen angeordneten Prüfsonden abgetastet werden, ein möglichst homogenes Magnetfeld im Prüfgut vorliegt, ist vorzugsweise vorgesehen, dass der Polschuh an beiden axialen Enden über die axialen Enden des Prüfkopfs hinaussteht, so dass ein beiderseitiger axialer Überstand existiert. Die Polschuhlänge sollte somit größer als die Prüfkopflänge sein. Andererseits sollte der Polschuh in axialer Richtung nicht zu lang sein. Zwar könnte sich dadurch die Homogenität des Magnetfelds im Bereich des Prüfkopfes bei unveränderter Länge des Prüfkopfs verbessern, jedoch würde viel Energie für die Magnetisierung von Bereichen aufgewendet, die nicht geprüft werden. Als guter Kompromiss hat sich herausgestellt, wenn das Verhältnis L / PKL zwischen der axiale Polschuhlänge L und der (effektiven) Prüfkopflänge PKL im Bereich von 1,5 bis 3,0 liegt, vorzugsweise unterhalb von 2,0.

Die Erfindung kann bei der Prüfung von Rohren und auch von massiven Rundmaterialstäben angewendet werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
Fig. 1 zeigt schematisch eine Prüfvorrichtung zur Streuflussprüfung von ferromagnetischen Rohren, die mit konventionellen Polschuhen ausgestattet ist;
Fig. 2A bis 2C zeigen verschiedene Fehlertypen;
Fig. 3 veranschaulicht einige Geometrieparameter zur Charakterisierung der Prüfgeometrie;
Fig. 4 zeigt schematisch einen Polschuh mit zylindrischer Feldaustrittsfläche entsprechend dem Stand der Technik;
Fig. 5A bis 5C veranschaulichen auf unterschiedliche Weise die Feldverteilung des Tangentialfeldes bei einem Polschuh mit zylindrischer Feldaustrittsfläche;
Fig. 6 bis 9 veranschaulichen schematisch einige von der Magnetisierung beeinflusste Probleme bezüglich Fehlerdetektion;
Fig. 10 zeigt schematisch die Gestalt eines Polschuhs gemäß einem Ausführungsbeispiel der Erfindung von hinten;
Fig. 11 zeigt schematisch einen Radialschnitt durch zwei in Prüfkonfiguration angeordnete Polschuhe gemäß einem Ausführungsbeispiel der Erfindung;
Fig. 12 zeigt schematisch einen Polschuh mit nicht-kreiszylindrisch gestalteter Feldaustrittsfläche gemäß einem Ausführungsbeispiel der Erfindung;
Fig. 13 bis 15 veranschaulichen, wie sich eine Umschlingungsvariation und eine Luftspaltvariation sowohl einzeln als auch in Kombination miteinander auf die Homogenisierung (Vergleichmäßigung) der Magnetisierung auswirken;
Fig. 16A, 16B zeigt die Feldverteilung des Tangentialfeldes an einem Polschuh gemäß Stand der Technik (Fig 16A) im Vergleich zur Feldverteilung des Tangentialfeldes gemäß einem Ausführungsbeispiel mit Umschlingungsvariation und Luftspaltvariation (Fig. 16B).

### DETAILLIERTE BESCHREIBUNG DER AUSFÜHRUNGSBEISPIELE

Ausführungsbeispiele der beanspruchten Erfindung werden im Folgenden anhand einer Prüfvorrichtung 100 zur Streuflussprüfung von ferromagnetischem Prüfgut 110 in Form von warm gewalzten ferromagnetischen Rohren im Durchlaufverfahren erläutert. In der Prüfvorrichtung wird ein Prüfvolumen des Prüfguts mittels einer Magnetisierungseinrichtung 200 magnetisiert und mit Hilfe mindestens einer in einem Prüfkopf 120 untergebrachten, magnetfeldempfindlichen Prüfsonde (Streuflusssonde) zur Erfassung von durch die Defekte verursachten magnetischen Streufeldern abgetastet. Dabei findet eine Relativbewegung zwischen dem Prüfkopf bzw. der Prüfsonde und der Oberfläche 115 des Prüfguts in einer Abtastrichtung statt.

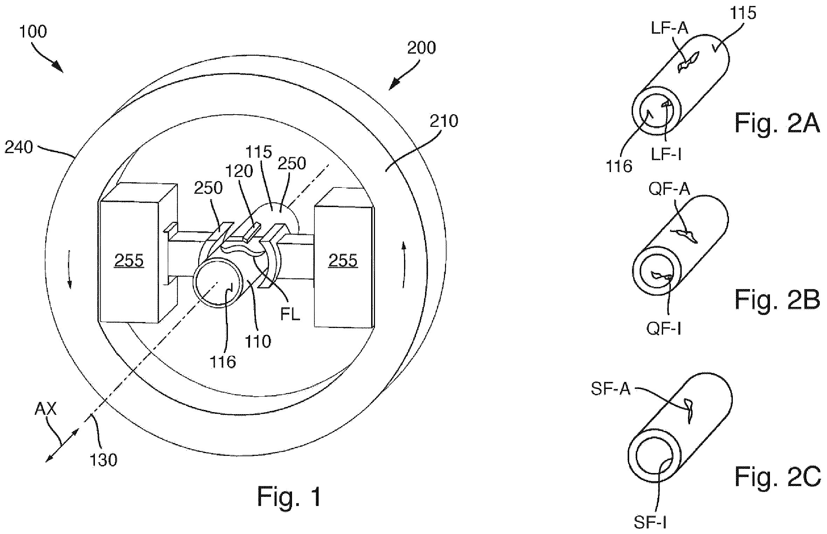

Die Prüfvorrichtung 100 ist für den Nachweis von Defekten bzw. Unvollkommenheiten oder Ungänzen unterschiedlicher Art ausgelegt und kann beispielsweise Walzfehler sowohl an der Rohrinnenseite 116 (Innenfehler) als auch an der Rohraußenseite 115 (Außenfehler) zuverlässig detektieren. Dabei können sowohl Längsfehler (Fehler mit Hauptausdehnungsrichtung parallel zur Rohrlängsachse) als auch Querfehler (Fehler mit Haupterstreckungsrichtung in Umfangsrichtung bzw. senkrecht zur Rohrlängsachse) und Schrägfehler (quer zur Längsrichtung und zur Umfangsrichtung) zuverlässig aufgefunden und charakterisiert werden. Die Fig. 2A bis 2C zeigen schematisch unterschiedliche Fehlertypen.

Die Prüfvorrichtung 100 ist u.a. dafür ausgelegt, dass das Prüfgut in einem Prüfbetrieb parallel zu einer Durchlaufachse 130 durch die Prüfvorrichtung 100 hindurchläuft und der Prüfkopf 120 und die Magnetisierungseinrichtung 200 um die Durchlaufachse 130 rotieren. Die Durchlaufachse entspricht der Prüfvorrichtungsachse. Dadurch ergeben sich schraubenförmige Prüfspuren. Bei einer Ausführungsform sind zwei Teilsysteme in einem Multiprüfblock integriert. Unter anderem für die Längsfehlerprüfung ist ein rotierendes Teilsystem vorgesehen, dessen Grundprinzip anhand von Fig. 1 erläutert wird. Für die Querfehlerprüfung ist ein (nicht dargestelltes) stationäres Teilsystem mit einer ringförmigen Anordnung mit mehreren um den Umfang der Anordnung verteilten Sensor-Arrays vorgesehen. Die Teilsysteme sind in Durchlaufrichtung des Rohres hintereinander angeordnet, wobei die Reihenfolge beliebig sein kann. Bei anderen, nicht näher dargestellten Ausführungsformen kann ein einziges System ausreichen, z.B. ein einziges rotierendes System.

Das rotierende Teilsystem (vgl. Fig. 1) hat einen Rotierkopf 240, der im Prüfbetrieb um die Durchlaufachse 130 bzw. eine dazu koaxiale Rotierkopfrotationsachse rotiert, die der Prüfvorrichtungsachse entspricht. Der Rotierkopf umfasst eine Magnetisierungseinrichtung 200 mit einem um das Prüfgut 110 herum rotierenden Ringjoch 210, welches an diametral gegenüberliegenden Stellen radial zur Prüflingsoberfläche ausgerichtete Polschuhe 250 aufweist. An den Polschuhen sind Magnetisierungswicklungen 255 angebracht. Werden diese mit Strom beaufschlagt, wird im Inneren des Prüflings 110 ein magnetischer Fluss bzw. ein Magnetfeld MF (Gleichfeld) erzeugt, dessen Feldlinien mehr oder weniger in Umfangsrichtung des Prüflings, also senkrecht zur Längsrichtung des Rohres, verlaufen.

An dem Rotierkopf 240 sind jeweils in Umfangsrichtung zwischen den Polschuhen 250 Prüfköpfe 120 angeordnet, die jeweils ein Sonden-Array enthalten, wobei jedes Sonden-Array eine Vielzahl von einzelnen Sonden (Prüfsonden) umfasst. Die Reihe von Sonden erstreckt sich über eine Prüfkopflänge in Axialrichtung AX bzw. parallel zur Durchlaufachse 130. Beispiele für mögliche Sondenanordnungen sind in der DE 10 2014 212 499 A1 gezeigt, deren Offenbarung insoweit durch Bezugnahme zum Inhalt dieser Beschreibung gemacht wird.

Das Ringjoch 210 zusammen mit den Polschuhen 250 und den Prüfköpfen 120 dreht sich bei der Prüfung je nach Typ der Sonden z.B. mit Drehzahlen zwischen ca. 60 und ca. 1200 min⁻¹. Das zu prüfende Rohr 110 wird gleichzeitig mit einer Prüfgeschwindigkeit (beispielsweise bis zu 3 m/s oder mehr) in Durchlaufrichtung 130 vorwärts transportiert. Die Prüfköpfe 120 schleifen dabei auf der Rohroberfläche und tasten diese auf einer schraubenförmigen Bahn lückenlos ab. Die Sonden des Sonden-Arrays sind innerhalb der Prüfköpfe in einem kleinen Prüfabstand zur Oberfläche 115 des Prüfguts angeordnet, der zum Beispiel in der Größenordnung von 0,2 mm bis 2 mm liegen kann.

Dadurch, dass die Magnetfeldlinien FL innerhalb des Rohrmaterials im Wesentlichen in Umfangsrichtung verlaufen, ist diese Prüfung besonders empfindlich für Längsfehler LF-A an der Rohraußenseite 115 und Längsfehler LF-I an der Rohrinnenseite 116, die den Magnetfluss in Umfangsrichtung maximal stören und dadurch starke Streuflussfelder erzeugen (vgl. Fig. 2A). Auch Schrägfehler SF-A, SF-I (Fig. 2C) können erfasst werden, allerdings mit geringerer Empfindlichkeit. In Umfangsrichtung verlaufende Querfehler QF-A, QF-I (vgl. Fig. 2B) werden dagegen nicht mit ausreichender Signalstärke detektiert.

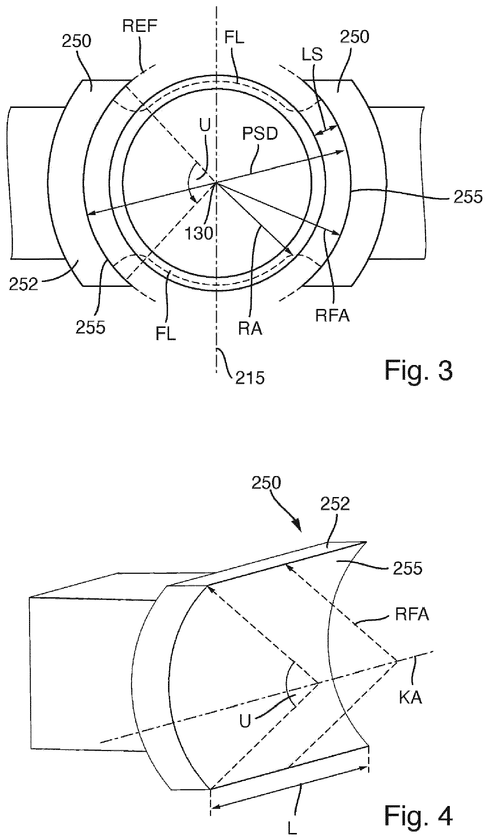

Zur Veranschaulichung der Prüfgeometrie und einiger maßgeblicher Parameter zeigt Fig. 3 einen senkrecht zur Durchlaufachse 130 geführten Querschnitt durch die Ebene der Polschuhe 250 mit dem dazwischen angeordneten Rohr. Das Rohr wird idealerweise koaxial zur Durchlaufachse 130 durch die Prüfvorrichtung 100 bewegt, so dass seine Längsmittelachse mit der Durchlaufachse 130 zusammenfällt. Die schematisch dargestellten Polschuhe 250 entsprechen dem Stand der Technik, ein solcher Polschuh ist in der Schrägperspektive von Fig. 4 schematisch dargestellt.

Jeder der Polschuhe 250 ist aus einem magnetisch leitenden, vorzugsweise ferromagnetischen Material hergestellt und hat einen Polschuhkörper 252, an dem eine an die Oberfläche des Prüfguts angepasste Feldaustrittsfläche 255 ausgebildet ist. Diese hat die Gestalt eines rechteckigen Ausschnitts der Mantelfläche eines Kreiszylinders. Zur Magnetisierung treten die Feldlinien FL des magnetisierenden Magnetfelds aus der Feldaustrittsfläche aus, überbrücken einen materialfreien Zwischenraum bzw. Luftspalt LS und dringen an der gegenüberliegenden Seite über die äußere Oberfläche 115 in das Prüfgut 110 ein.

Die Polschuhe 250 sind rotationssymmetrisch zur Durchlaufachse 130 gestaltet. Jeder Polschuh umschlingt die kreiszylindrische Außenseite des Prüflings über einen Umschlingungswinkel U, der dem in Umfangsrichtung gemessenen Winkel zwischen den in Umfangsrichtung gesehenen Außenkanten der Polschuhe entspricht. Der Umschlingungswinkel beträgt hier jeweils 90°. Jeder Polschuh erstreckt sich in Axialrichtung (parallel zur Durchlaufachse) über eine gewisse axiale Länge L (Polschuhlänge L) (vgl. Fig. 4).

Die konkavzylindrische Gestalt der Feldaustrittsfläche 255 ist so ausgelegt, dass über den gesamten Umschlingungswinkel U und über die gesamte Länge L jedes Polschuhs der radiale Abstand zwischen der äußeren Oberfläche 115 (Rohraußenseite) des Prüfguts und der Feldaustrittsfläche 255 möglichst konstant ist. Der luftgefüllte Raum zwischen Feldaustrittsfläche und Prüfgutoberfläche wird meist als "Luftspalt" LS bezeichnet. Die Polschuhgeometrie ist für einen gewissen Durchmesserbereich um einen Nominaldurchmesser ausgelegt. Hat das Prüfgut den Nominaldurchmesser, so ist die Luftspaltdicke in Umfangsrichtung weitgehend konstant. Bei Abweichungen vom Nominaldurchmesser ergibt sich eine leichte Variation der Luftspaltdicke in Umfangsrichtung, jedoch nicht in Axialrichtung.

Die im Wesentlichen konstante Luftspaltdicke wird dadurch erreicht, dass die Gestalt der Feldaustrittsfläche an die Prüfgutoberfläche angepasst ist und dazu konkavzylindrisch ist und mit einer konkavzylindrischen Referenzfläche REF zusammenfällt, deren Krümmungsachse KA bei richtiger Justage der Prüfvorrichtung mit der Durchlaufachse 130 zusammenfällt. Die Luftspaltdicke, also die radiale Dicke des Luftspalts LS, ergibt sich dadurch als Differenz zwischen dem Krümmungsradius der Feldaustrittsfläche 255 (entsprechend dem radialen Abstand RFA der Feldaustrittsfläche 255 von der Krümmungsachse KA der Referenzfläche REF) und dem Außenradius RA des Rohrs bzw. des Prüfguts. Die durch die Durchlaufachse hindurch gemessene lichte Weite zwischen den einander zugewandten Feldaustrittsflächen wird auch als Polschuhdurchmesser PSD bezeichnet. Bei korrekt justierten Polschuhen entspricht die Hälfte des Polschuhdurchmessers PSD somit dem Radius der Referenzfläche REF.

Mithilfe von Finite-Elemente-Simulationen (FEM-Simulationen) wurden das Ausmaß und die Orientierung der Magnetisierung innerhalb des Prüfguts im durch die Polschuhe magnetisierten Bereich untersucht. Dabei zeigte sich, dass die Form der Polschuhe des Stands der Technik (Fig. 3 oder 4) dazu führt, dass in der axialen Mitte zwischen den Polschuhen die Magnetisierung des Rohrs höher als an den (axialen) Rändern des Polschuhs ist. Außerdem bauchen die magnetischen Feldlinien an den axialen Rändern des Polschuhs aus, d.h. die Magnetfeldlinien sind dort nicht mehr parallel zueinander. Die einzigen Positionen, an denen die Magnetfeldlinien parallel liegen, liegen mittig zwischen den Polschuhen, allerdings nur, wenn die Rotationsgeschwindigkeit zwischen Polschuh und Prüfgut Null ist (keine relative Rotation)

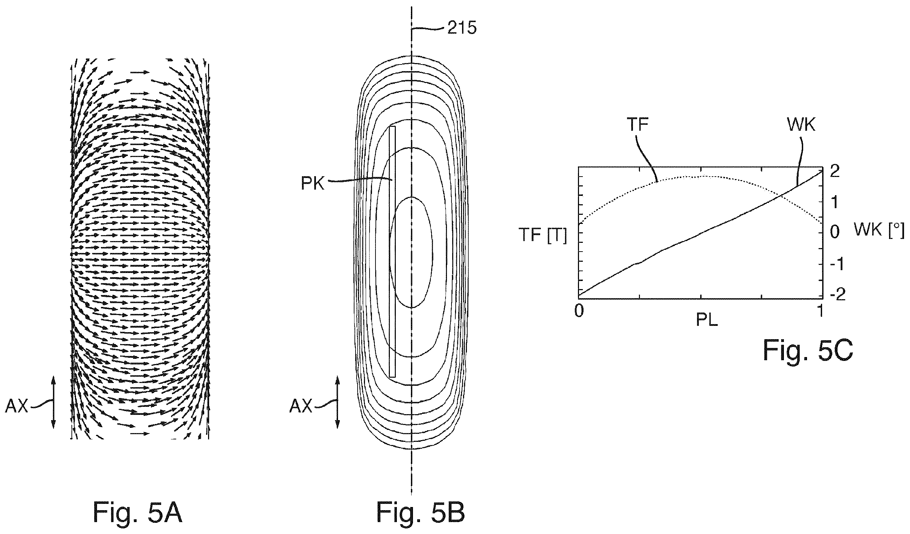

Zur weiteren Veranschaulichung zeigen die Figuren 5A und 5B schematisch Draufsichten eines Rohrs, dessen Längsmittelachse in Axialrichtung der Prüfvorrichtung orientiert ist. Dargestellt sind die Verhältnisse für das Tangentialfeld an der Oberfläche des Prüfguts. Als Tangentialfeld wird die Komponente des Magnetfelds bezeichnet, die in Umfangsrichtung innerhalb des Prüfguts verläuft. Zur Erläuterung: Das eigentliche Tangentialfeld ist in Zylinderkoordinaten der Betrag der Komponente Bₚₕᵢ. Um das Ausbauchen am Rand mit Pfeilen beschreiben zu können wird aber noch die Komponente B_{z} benötigt, d.h. die Pfeile stellen den Winkel zwischen Bₚₕᵢ und B_{z} dar.

Figur 5A zeigt den Verlauf des Tangentialfeldes mit Pfeilen. Die Pfeile haben Einheitslänge und geben die Orientierung des Tangentialfeldes an. Figur 5B stellt Linien gleicher Flussdichte des Tangentialfeldes dar, wobei die Flussdichte innerhalb der inneren Bereiche am höchsten ist. Das Diagramm in Figur 5C stellt schematisch die Stärke des Tangentialfeld TF (in T (Tesla)) und den Winkel WK zwischen diesem und der Axialrichtung als Funktion des axialen Orts entlang der Prüfkopflänge dar. Mit der punktierten Kurve TF ist die Größe des Tangentialfeldes gezeigt, welches in der Mitte am stärksten ist. Die durchgezogene Linie repräsentiert den Winkel WK zwischen der Umfangsrichtung und der Orientierung der Tangentialfeldkomponente. Die absolute Größe des Winkels nimmt von der Mitte zu den axialen Enden zu, wobei Winkelabweichungen in unterschiedliche Richtungen gehen.

Generell ist es so, dass die Magnetfeldlinien möglichst senkrecht auf dem Fehler stehen sollten, um bei der Streuflussprüfung das Fehlersignal zu maximieren. Sobald der Winkel zwischen Fehlerorientierung und Magnetfeldlinien kleiner wird, wird auch das Fehlersignal kleiner. Dies ist ein Grund für die generell reduzierte Empfindlichkeit bei Schrägfehlern. Bei Längsfehlern ist dabei der Verlauf des Tangentialfelds maßgeblich, also jenes Felds, dessen Feldlinien tangential verlaufen.

Wenn auch Innenfehler gefunden werden sollen, ist es anzustreben, dass auch an der Rohrinnenseite ein genügend hohes Tangentialfeld vorhanden ist. Durch die relative Rotation zwischen Prüfgut und Magnetisierungseinrichtung treten jedoch zwei Effekte auf, die hier berücksichtigt werden sollten. Zum einen verschiebt sich durch den Skin-Effekt das Tangentialfeld zur Rohraußenseite und zum anderen verschieben sich die Maxima des Tangentialfelds auf der Rohrinnenseite und der Rohraußenseite in entgegengesetzte Richtungen.

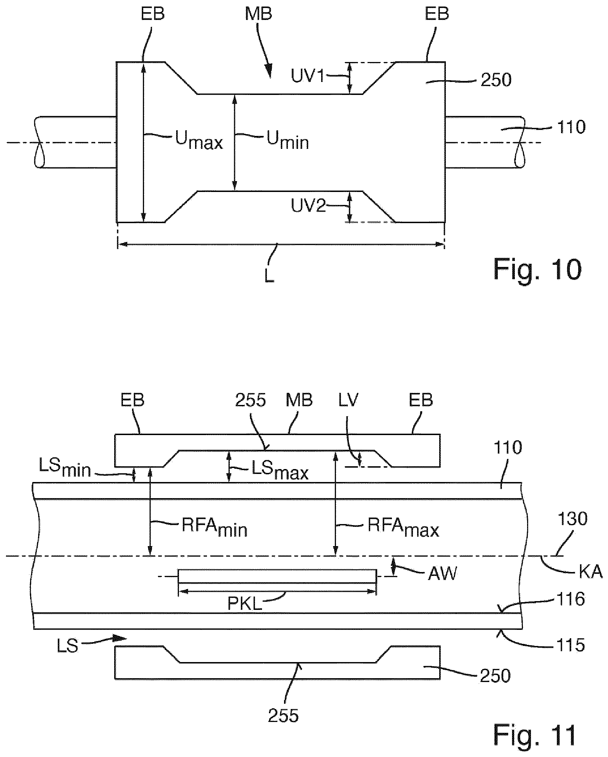

Im Hinblick auf eine gute Detektierbarkeit von Innenfehlern hat es sich daher als zweckmäßig herausgestellt, den Prüfkopf nicht symmetrisch zwischen den Polschuhen zu positionieren, sondern asymmetrisch zwischen den Polschuhen. Zur Veranschaulichung zeigt Fig. 3 eine axiale Schnittebene 215, die senkrecht zu einer diametralen Verbindungslinie zwischen den Polschuhen steht. Der Prüfkopf kann z.B. in Umfangsrichtung um einen Asymmetriewinkel von 5° bis 15° gegenüber dieser Schnittebene versetzt angeordnet sein. Zur Veranschaulichung ist in Figur 5B eine bevorzugte Position des Prüfkopfs PK eingezeichnet (vgl. auch Fig. 11). Zudem sollte die Rotationsgeschwindigkeit nicht zu hoch sein.

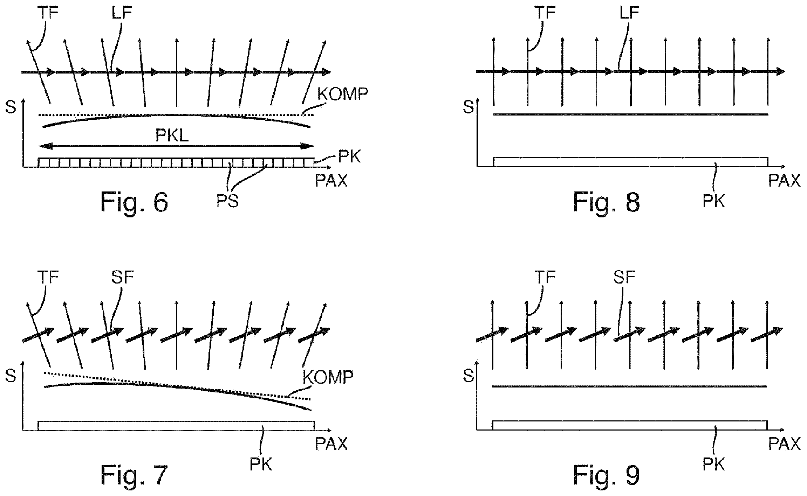

Einige Aspekte der von den Erfindern erkannten Probleme des Standes der Technik werden nachfolgend anhand der Fig. 6 bis 9 erläutert. Der Prüfkopf PK weist ein Sonden-Array mit einer geraden Reihe von einzelnen, kleinflächigen Sondenelementen bzw. Prüfsonden PS auf, die über die Prüfkopflänge PKL gleichmäßig verteilt sind (vgl. Fig. 6, gilt für alle Fig. 6 bis 9). Die damit abtastbaren Prüfspuren überlappen einander, so dass die Prüfsonden gemeinsam eine effektive Prüfkopflänge definieren, die kurz als Prüfkopflänge PKL bezeichnet wird.

Sowohl die eingangs erwähnte niedrigere Magnetisierung als auch die nicht mehr parallel verlaufenden Feldlinien in den axialen Endbereichen der Polschuhe führen zu einem geringeren Fehlersignal, insbesondere wenn ein Fehler von einem an einem Endbereich des Prüfkopfs PK liegenden Sondenelement detektiert wird.

Fig. 6 veranschaulicht dies anhand eines schematischen Diagramms, das die normierte Sensitivität S eines Sensors bzw. eines Sondenelements oder einer Prüfsonde PS als Funktion der Axialposition PAX im Vergleich zum Prüfkopf PK bzw. gegenüber der (in Axialrichtung gemessenen) Prüfkopflänge PKL aufträgt. Die Pfeile TF repräsentieren die Orientierung des Tangentialfelds (Tangentialkomponente des Magnetfeldes an der Prüfgutoberfläche), die Pfeile LF die Orientierung des Längsfehlers im inhomogenen Magnetfeld. Die Kurve S repräsentiert die Sensitivität, die über die Prüfkopflänge variiert. Das Fehlersignal ist also abhängig davon, an welcher Position der Fehler vom Prüfkopf detektiert wird. Durch einen Abgleich auf einen Abgleichfehler könnte der Abfall des Fehlersignals kompensiert werden (gestrichelte Linie KOMP).

Anders verhält es sich jedoch bei Schrägfehlern SF, also Fehlern, die gegenüber einem Längsfehler und einem Querfehler schräg verlaufen, beispielsweise im Winkel zwischen 10° und 30° oder 40° bezogen auf einen Längsfehler (vgl. Fig. 7). Durch die Schräglage stehen die Fehler an einem Ende des Prüfkopfs nun in einem anderen Winkel zu den Feldlinien als am gegenüberliegenden axialen Ende. Dadurch ergeben sich unterschiedlich hohe Fehlersignale (bzw. unterschiedlich hohe Sensitivitäten) abhängig davon, ob ein Fehler am Anfang oder am Ende eines Prüfkopfs detektiert wird. Denn durch die Schräglage des Fehlers steht dieser an einem Ende des Prüfkopfs (in Fig. 7 links) fast senkrecht zu den Feldlinien, d.h. hier erzeugt der Fehler ein fast maximales Fehlersignal, während am gegenüberliegenden Ende derselbe Schrägfehler SF nur ein wesentlich geringeres Fehlersignal erzeugt, weil er mit den Feldlinien einen kleineren Winkel einschließt. Durch einen Abgleich kann erreicht werden, dass an beiden Enden des Prüfkopfs das Fehlersignal angehoben wird (Linie KOMP). Der Abgleich auf einen Längsfehler kann den Signalabfall durch die Schräglage jedoch nicht kompensieren. Dadurch wird eine relativ schlechte Reproduzierbarkeit der Fehler verursacht.

Aufgrund dieser Beobachtungen wurde ein Optimierungsansatz entwickelt, wonach u.a. die Reproduzierbarkeit für Schrägfehler verbessert werden kann, wenn das Magnetfeld an der Position des Prüfkopfs (besser als bisher) über die Länge des Prüfkopfs homogenisiert wird. In einem homogenen Magnetfeld ist der Winkel zwischen dem Schrägfehler und den Feldlinien über die Länge des Prüfkopfs immer gleich, d.h. unabhängig davon, an welchem Ende des Prüfkopfs PK der Schrägfehler SF erfasst wird. Zur Veranschaulichung zeigt Fig. 8 einen Längsfehler LF im homogenen Magnetfeld. Bei ideal optimierter Polschuhgeometrie sind die Feldlinien über die gesamte Prüfkopflänge parallel, der Längsfehler steht immer in 90° dazu, wodurch sich ein gleichbleibend maximales Fehlersignal ergibt.

Fig. 9 veranschaulicht zum Vergleich die Wirkung auf Schrägfehler SF im homogenen Magnetfeld. Bei ideal optimiertem Polschuh ist der Winkel zwischen dem Schrägfehler SF und den Feldlinien FL über die gesamte Prüfkopflänge kleiner als 90°, aber konstant. Dadurch ergibt sich ein im Vergleich zum Längsfehler kleineres, aber konstantes Fehlersignal.

Nach den Erkenntnissen der Erfinder kann eine verbesserte Homogenisierung des Magnetfelds im Rohr oder in einem anderen Prüfling an der Position des Prüfkopfs durch gezielte Veränderungen an der Polschuhgeometrie erreicht werden. Zum einen kann die Dicke des Luftspalts variiert werden, indem die Feldaustrittsfläche des Polschuhs eine nicht-konkavzylindrische Gestalt erhält, die von einer konkavzylindrischen Referenzfläche in der Weise abweicht, dass ein radialer Abstand der Feldaustrittsfläche von der Krümmungsachse der Referenzfläche (entsprechend Durchlaufachse) in Axialrichtung des Prüfkopfs in geeigneter Weise variiert. Alternativ oder zusätzlich kann die Umschlingung variiert werden, so dass der Umschlingungswinkel eine veränderliche Funktion in Axialrichtung des Polschuhs wird.

Die Prüfvorrichtung kann ansonsten so aufgebaut sein wie im Zusammenhang von Fig. 1 beschrieben, allerdings mit asymmetrisch angeordnetem Prüfkopf PK.

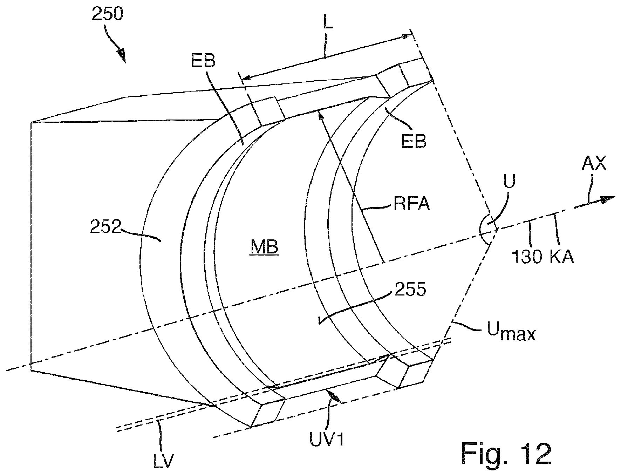

Zur Veranschaulichung einer möglichen Ausgestaltung eines Polschuhs zeigt Fig. 10 die Geometrie eines Polschuhs 250 von hinten, also von radial außen zusammen mit dem umschlungenen Rohr, das das Prüfgut 110 ist. Zu erkennen ist die Umschlingungsvariation mit einer relativen großen Umschlingung an den axialen Rändern des Polschuhs und einer kleineren Umschlingung in der Mitte. Fig. 11 zeigt einen schematischen Längsschnitt entlang einer die Durchlaufachse 130 enthaltenen Radialebene zusammen mit dem umschlungenen Rohr und der Position des Prüfkopfs PK. In der Radialebene (Zeichnungsebene) verläuft eine diametrale Verbindungslinie zwischen den Polschuhen, senkrecht zu dieser liegt die radiale Schnittebene 215. In dieser Darstellung ist besonders gut die Luftspaltvariation zu erkennen, wobei der Luftspalt LS im Mittelbereich zwischen den axialen Enden größer ist als in den axialen Endbereichen. Fig. 12 zeigt schematisch ein Ausführungsbeispiel eines Polschuhs 250, dessen Feldaustrittsfläche 255 unter Anwendung der Prinzipien der beanspruchten Erfindung gestaltet ist.

Die Umschlingung variiert beim Beispiel von Fig. 10 zwischen der minimalen Umschlingung Uₘᵢₙ im Mittelbereich MB und der maximalen Umschlingung Uₘₐₓ in den beiden Endbereichen EB. Die Differenz zwischen Minimalwert und Maximalwert wird hier als Umschlingungsvariation UV bezeichnet, somit gilt: UV = Uₘₐₓ - Uₘᵢₙ. Die Umschlingungsvariation UV ergibt sich im Beispielsfall dadurch, dass die Längskanten im Mittelbereich MB gegenüber den Längskanten in den Endbereichen EB jeweils um einen Betrag UV1 bzw. UV2 symmetrisch zur Mittelachse zurückgesetzt sind, wobei UV = UV1 + UV2 gilt. Im Beispielsfall ist die Umschlingung in den beiden Endbereichen EB jeweils über eine gewisse axiale Länge (beispielsweise zwischen 10 % und 20 % der Gesamtlänge L des Polschuhs) konstant, geht dann zur Mitte hin entlang eines Übergangsbereichs kontinuierlich zurück und ist dann im Mittelbereich MB wieder konstant, wobei die axiale Länge des mittleren Bereichs MB mit minimalen Umschlingungswinkel zwischen 40 % und 60 % der Gesamtlänge L des Polschuhs in axialer Richtung beträgt. Die Gestalt des Polschuhs 250 ist bezogen auf eine parallel zur Axialrichtung verlaufende Symmetrieebene SE spiegelsymmetrisch. Anstelle des schrägen Übergangsbereichs können auch Stufen vorgesehen sein oder auch ein kontinuierlicher Übergang ohne Ecken oder Stufen zwischen dem Bereich maximaler Umfangswinkel und dem Bereich minimaler Umfangswinkel. Die Polschuhgestalt muss nicht symmetrisch sein. Beispielsweise können UV1 und UV2 wenigstens abschnittsweise ungleich sein.

Der Prüfkopf PK ist im Beispielsfall mittig zwischen den axialen Enden angeordnet und erstreckt sich über den gesamten mittleren Bereich minimaler Umschlingung bis in die jeweiligen Übergangsabschnitte, aber nicht bis in die Endabschnitte. Es kann auch sein, dass die axialen Enden des Prüfkopfs bis in die Endbereiche hineinragen, vorzugsweise jedoch nicht über die axialen Enden des Prüfschuhs hinaus.

Vorzugsweise steht somit der Polschuh an beiden axialen Enden über die axialen Enden des Prüfkopfs hinaus, so dass ein beidseitiger axialer Überstand existiert. Dies trägt zur Homogenisierung im Bereich der axialen Enden des Prüfkopfes bei. Grundsätzlich verbessert sich die Homogenität, je größer der Überstand ist. Die Polschullänge L sollte allerdings nicht größer als nötig sein, da damit unter anderem auch der Energiebedarf für die Magnetisierung steigt und Bauraumprobleme auftreten können. Bei bevorzugten Ausführungsformen liegt das Verhältnis zwischen Polschullänge L und Prüfkopflänge PKS im Bereich von 1,5 bis 3,0, vorzugsweise unterhalb von 2,5.

Das Ausmaß der Umschlingungsvariation UV sollte signifikant oberhalb typischer Fertigungstoleranzen liegen, beispielsweise bei 5° oder mehr. Andererseits sollte die Umschlingungsvariation auch nicht so groß sein, beispielsweise nicht mehr als 35°, um zu erreichen, dass Sekundäreffekte kein störendes Ausmaß annehmen.

Sowohl der Maximalwert als auch der Minimalwert der Umschlingung liegen bei deutlich mehr als 90°. Der Maximalwert kann z.B. bei im Bereich von 100° bis 160° liegen.

Auch die axiale Variation des Luftspaltes LS sollte deutlich oberhalb von fertigungsbedingten Toleranzen liegen und weder zu groß noch zu klein sein. In der Prüfkonfiguration von Fig. 11 besteht zwischen der Feldaustrittsfläche 255 eines Polschuhs 250 und der Prüflingsoberfläche 115 ein Luftspalt LS, dessen in radialer Richtung gemessene Dicke zwischen einem Minimalwert LSₘᵢₙ in den beiden axialen Endbereichen EB und einem Maximalwert LSₘₐₓ im Mittelbereich MB variiert. Aus der Differenz der Extremwerte ergibt sich eine Luftspaltvariation LV = LSₘₐₓ - LSₘᵢₙ.

In den beiden axialen Endbereichen EB ist die Feldaustrittsfläche 255 jeweils kreiszylindrisch gekrümmt und fällt mit einer kreiszylindrischen Referenzfläche zusammen, deren Krümmungsachse KA mit der Durchlaufrichtung 130 zusammenfällt, wobei der Radius (Halbmesser) dieser Referenzfläche den Wert RFAₘᵢₙ hat. Im Mittelbereich MB ist die Feldaustrittsfläche ebenfalls über eine gewisse Länge kreiszylindrisch gekrümmt. Sie fällt mit einer kreiszylindrischen Referenzfläche zusammen, deren Radius (Krümmungsradius) RFAₘₐₓ beträgt. Zwischen den Endabschnitten und dem relativ langen Mittelbereich MB gibt es Übergangsabschnitte in Form von kegelstumpfförmigen Schrägflächen, deren Radius in Axialrichtung kontinuierlich zunimmt bzw. abnimmt.

Die Feldaustrittsfläche 255 ist somit insgesamt bezogen auf die Krümmungsachse KA der einzelnen Abschnitte MB und EB sowie der Übergangsabschnitte rotationssymmetrisch in dem Sinne, dass die Feldaustrittsfläche als Ausschnitt einer rotationssymmetrischen Fläche beschrieben werden kann. Die Feldaustrittsfläche hat aber eine Gestalt, die signifikant von der kreiszylindrischen Gestalt bei Polschuhen des Standes der Technik abweicht.

Die Geometrie der nicht-kreiszylindrischen Gestalt der Feldaustrittsfläche 255 kann auch analog zu einem Zylindrizitätsfehler beschrieben werden. Die Endbereiche mit minimalen Krümmungsradius RFAₘᵢₙ definieren einen Innenzylinder in der Weise, dass sie als Teilflächen eines Innenzylinders beschrieben werden können. Der Mittelbereich mit maximalen Krümmungsradius RFAₘₐₓ definiert einen Außenzylinder in der Weise, dass die Abschnitte maximalen Krümmungsradius RFAₘₐₓ auf diesem Außenzylinder liegen. Der Verlauf der Feldaustrittsfläche reicht also vom Innenzylinder zum Außenzylinder und hat Abschnitte, die zwischen diesen begrenzenden Zylindern liegen. Die Gestaltabweichung von einer Kreiszylinderfläche kann durch die Radiendifferenz der beiden Radien RFAₘₐₓ und RFAₘᵢₙ quantifiziert werden. Bezogen auf den Minimalradius RFAₘᵢₙ sollte die Luftspaltvariation (bzw. die Radiendifferenz) nicht zu klein und nicht zu groß sein. Vorzugsweise beträgt die Luftspaltvariation zwischen 5 % und 40 % des Minimalradius RFAₘᵢₙ .

In Fig. 11 ist auch gut zu erkennen, dass der Prüfkopf PK, der sich in axialer Richtung über eine Prüfkopflänge PKL erstreckt, in Umfangsrichtung nicht symmetrisch zwischen den einander diametral gegenüberliegenden Polschuhen angeordnet ist, sondern gegenüber axialen Schnittebene 215 um einen Asymmetriewinkel AW versetzt. Damit kann dynamischen Effekten begegnet werden, die sich durch die Relativrotationen zwischen der Magnetisierungseinrichtung bzw. dem Prüfkopf und dem Prüfling während der Prüfung ergeben. Es hat sich gezeigt, dass Asymmetriewinkel AW im Bereich von 5° bis 15° besonders deutliche Verbesserungen der Prüfempfindlichkeit insbesondere für Schrägfehler und/oder bei der Innenfehlerauffindbarkeit bringen.

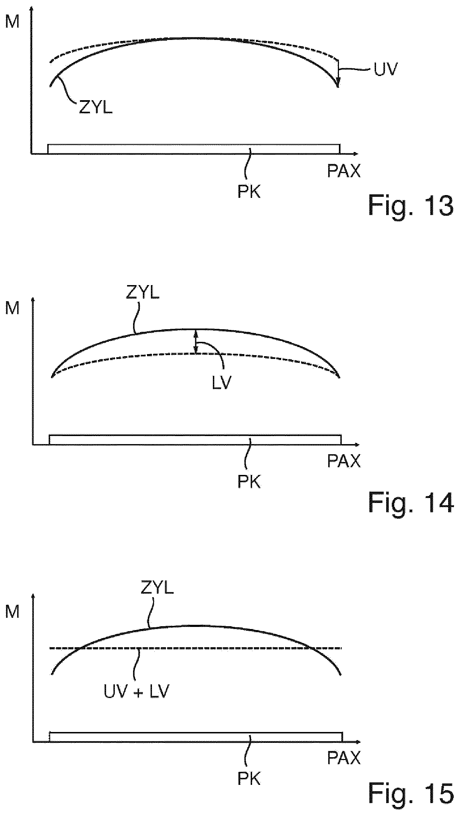

Anhand der Fig. 13, 14 und 15 wird erläutert, wie sich die Maßnahmen der Umschlingungsvariation und der Luftspaltvariation sowohl einzeln als auch in Kombination miteinander auf die Vergleichmäßigung des mit Hilfe des Polschuhs erzeugten Magnetfeldes auswirken. Dargestellt ist jeweils die Abhängigkeit der Magnetisierung M von der axialen Position PAX im Bereich des Prüfkopfs PK. Die durchgezogene Linie ZYL zeigt jeweils den Verlauf der Magnetisierung bei einem konventionellen Polschuh mit kreiszylindrischer Feldaustrittsfläche, die gestrichelte Linie den entsprechenden Verlauf bei einem Polschuh gemäß Fig. 10 bis 12.

Fig. 13 veranschaulicht den Effekt der Umschlingungsvariation UV. Die Vergrößerung der Umschlingung in den axialen Endbereichen im Vergleich zum Mittelabschnitt und/oder die Reduzierung der Umschlingung im Mittelbereich relativ zu den axialen Endbereichen führt zu einer relativen Anhebung der Magnetisierung in den Endbereichen bei im Wesentlichen unveränderter Magnetisierung im Mittelbereich, so dass über die axiale Länge gesehen die Ungleichmäßigkeit der Magnetisierung schon reduziert werden kann.

Fig. 14 veranschaulicht, dass durch die Vergrößerung des Luftspalts im Mittelbereich im Vergleich zu den axialen Endbereichen die Magnetisierung im Mittelbereich im Vergleich zu einem konventionellen Polschuh mit kreiszylindrischer Feldaustrittsfläche relativ zu den Endbereichen sinkt. Es ist erkennbar, dass auch allein die Luftspaltvariation LV bereits zu einer Vergleichmäßigung der Magnetisierung in Axialrichtung führt.

Fig. 15 stellt die Auswirkung der Kombinationen von Umschlingungsvariationen und Luftspaltvariationen schematisch dar. Während die Magnetisierung im Mittelbereich MB durch Vergrößerung des Luftspalts abgesenkt wird, wird die Magnetisierung in den Endbereichen EB aufgrund der Vergrößerung der Umschlingungswinkel dort relativ vergrößert, so dass sich insgesamt über die gesamte Länge des Prüfkopfs PK eine im Wesentlichen gleichmäßige Magnetisierung ergibt.

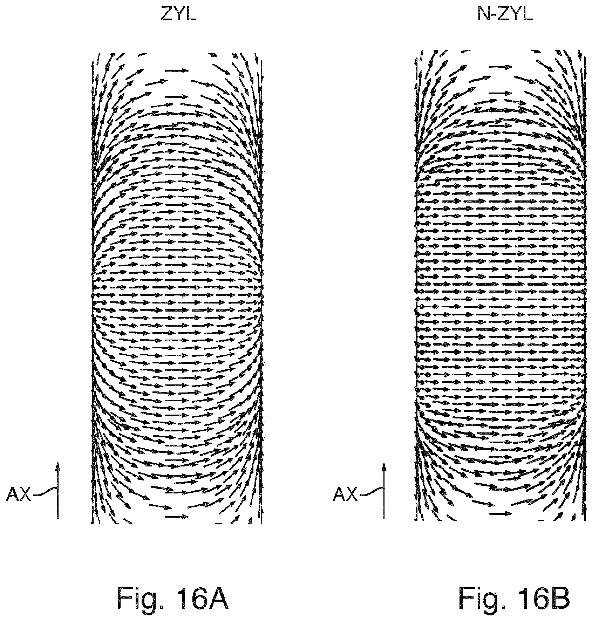

Besonders anschaulich kann der Effekt auch durch Betrachtung des Verlaufs der Orientierung des Tangentialfeldes erkannt werden. Fig. 16A zeigt die in der Einleitung beschriebenen Verhältnisse bei kreiszylindrischer Feldaustrittsfläche (ZYL) gemäß dem Stand der Technik, insbesondere die Ausbauchungen der Feldlinien in den axialen Endbereichen des Polschuhs. Fig. 16B zeigt im Vergleich dazu die Feldverteilung bei einem Polschuh N-ZYL mit nichtkreiszylindrischer Feldaustrittsfläche gemäß einem Ausführungsbeispiel der beanspruchten Erfindung. Es ist erkennbar, dass der Bereich homogener Magnetisierung in der Mitte sich zu den axialen Rändern hin deutlich vergrößert hat und dass die Ausbauchung an den axialen Rändern weniger deutlich ist als im Stand der Technik. Dies belegt die Wirksamkeit der erfindungsgemäßen Maßnahmen.

## Patentansprüche

1. Polschuh (250) zur Verwendung an einer Magnetisierungseinrichtung (200) zur Magnetisierung eines Prüfvolumens eines Prüfguts (110) in einer Prüfvorrichtung (100) zur Streuflussprüfung von ferromagnetischem Prüfgut mit einer im Wesentlichen kreiszylindrischen Oberfläche (115) zum Nachweis von Defekten, insbesondere zur Prüfung von ferromagnetischen Rohren,
wobei die Prüfvorrichtung einen Prüfkopf (120, PK) mit wenigstens einer Prüfsonde (PS) zum Abtasten der Oberfläche des Prüfguts zur Erfassung von durch Defekte verursachten magnetischen Streufeldern aufweist und die Magnetisierungseinrichtung (200) ausgebildet ist, im Bereich des Prüfkopfs (120, PK) eine Magnetisierung des Prüfguts zu erzeugen,
wobei die Prüfvorrichtung dafür ausgelegt ist, dass die Prüfvorrichtung und das Prüfgut in einem Prüfbetrieb eine Relativbewegung parallel zu einer Durchlaufachse (130) ausführen;
wobei der Polschuh (250) einen aus magnetisch leitendem Material bestehenden Polschuhkörper (252) aufweist, an dem eine an die Oberfläche (115) des Prüfguts (110) angepasste Feldaustrittsfläche (255) ausgebildet ist derart, dass in einer Prüfkonfiguration der Polschuh (250) das Prüfgut (110)) entlang einer parallel zur Durchlaufrichtung (130) gemessenen axialen Länge (L) des Polschuhs über einen Umschlingungswinkel (U) umschlingt und zwischen der Feldaustrittsfläche (255) und der Oberfläche des Prüfguts ein Luftspalt (LS) verbleibt,
**dadurch gekennzeichnet, dass**
die Feldaustrittsfläche (255) des Polschuhs (250) als Ausschnitt einer rotationssymmetrischen Fläche beschreibbar ist und eine nicht-konkavzylindrische Gestalt aufweist, die von einer konkavzylindrischen Referenzfläche (REF) derart abweicht, dass ein radialer Abstand (RFA) der Feldaustrittsfläche von einer Krümmungsachse (KA) der Referenzfläche in Axialrichtung des Polschuhs variiert, wobei der radiale Abstand (RFA) der Feldaustrittsfläche (255) von der Krümmungsachse (KA) der Referenzfläche in Axialrichtung des Prüfkopfs (120, PK) derart variiert, dass der radiale Abstand (RFA) in einem Mittelbereich (MB) zwischen axialen Endbereichen (EB) der Feldaustrittsfläche größer ist als in den axialen Endbereichen,
und/oder dass der Umschlingungswinkel (U) in Axialrichtung des Polschuhs variiert,
wobei der Umschlingungswinkel (U) in einem Mittelbereich (MB) zwischen axialen Endbereichen (EB) der Feldaustrittsfläche (255) kleiner ist als in den axialen Endbereichen (EB),
wobei in den beiden axialen Endbereichen (EB) die Feldaustrittsfläche (255) jeweils kreiszylindrisch gekrümmt ist und mit der kreiszylindrischen Referenzfläche zusammenfällt.

2. Polschuh nach Anspruch 1, **dadurch gekennzeichnet, dass** der Umschlingungswinkel (U) zwischen einem minimalen Umschlingungswinkel Uₘᵢₙ und einem maximalen Umschlingungswinkel Uₘₐₓ variiert und eine Umschlingungsvariation UV = Uₘₐₓ - Uₘᵢₙ größer als 5 ° und/oder kleiner als 35° ist.

3. Polschuh nach einem der vorhergehenden Ansprüche, **dadurch gekennzeichnet, dass** der radiale Abstand RFA der Feldaustrittsfläche (255) von der Krümmungsachse (KA) der Referenzfläche zwischen einem minimalen Abstand RFAₘᵢₙ und einem maximalen Abstand RFAₘₐₓ variiert und eine Radiendifferenz ΔRFA = RFAₘₐₓ - RFAₘᵢₙ größer als 2 mm und/oder kleiner als 40 mm ist und/oder dass die Radiendifferenz ΔRFA zwischen 5 % und 40 % des Minimalradius RFAₘᵢₙ beträgt.

4. Polschuh nach einem der vorhergehenden Ansprüche, **dadurch gekennzeichnet, dass** die Feldaustrittfläche (255) einen maximalen Umschlingungswinkel Uₘₐₓ von mehr als 90° aufweist, wobei der maximale Umschlingungswinkel Uₘₐₓ vorzugsweise im Bereich von 100° bis 160° liegt, insbesondere im Bereich von 115° bis 140 °.

5. Verwendung eines Polschuhs gemäß einem der vorhergehenden Ansprüche in einer Magnetisierungseinrichtung einer Prüfvorrichtung (100) zur Streuflussprüfung von ferromagnetischem Prüfgut (110) mit einer im Wesentlichen kreiszylindrischen Oberfläche (115), insbesondere von ferromagnetischen Rohren, zum Nachweis von Defekten, wobei die Prüfvorrichtung dafür ausgelegt ist, dass die Prüfvorrichtung (100) und das Prüfgut (110) in einem Prüfbetrieb eine Relativbewegung parallel zu einer Durchlaufachse (130) ausführen, die Prüfvorrichtung umfassend:
wenigstens einen Prüfkopf (120, PK) mit wenigstens einer Prüfsonde (PS) zum Abtasten der Oberfläche des Prüfguts (110) zur Erfassung von durch Defekte verursachten magnetischen Streufeldern;
die Magnetisierungseinrichtung (200) zur Magnetisierung eines Prüfvolumens des Prüfguts (110) im Bereich des Prüfkopfs (120, PK), wobei die Magnetisierungseinrichtung (200) radial zur Prüfgutoberfläche ausgerichtete Polschuhe (250) aufweist,
wobei der Polschuh (250) einen aus magnetisch leitendem Material bestehenden Polschuhkörper (252) aufweist, an dem eine an die Oberfläche des Prüfguts (110) angepasste Feldaustrittsfläche (255) derart ausgebildet ist, dass in einer Prüfkonfiguration der Polschuh (250) das Prüfgut (110) entlang einer parallel zur Durchlaufrichtung (130) gemessenen axialen Länge (L) über einen in Umfangsrichtung des Prüfguts gemessenen Umschlingungswinkel (U) umschlingt und zwischen der Feldaustrittsfläche (255) und der Oberfläche des Prüfguts ein Luftspalt (LS) verbleibt.

6. Verwendung nach Anspruch 5, **gekennzeichnet durch** einen um das Prüfgut (110) herum rotierbaren Rotierkopf (240), der eine Magnetisierungseinrichtung (200) aufweist, die an diametral gegenüberliegenden Stellen radial zur Oberfläche (115) des Prüfguts ausgerichtete Polschuhe (250) mit dem Prüfgut (110) zuzuwendenden Feldaustrittflächen (255) aufweist.

7. Verwendung nach Anspruch 5 oder 6, **dadurch gekennzeichnet, dass** die Polschuhe (250) einander rotationssymmetrisch zur Durchlaufachse (130) diametral gegenüberliegen und der Prüfkopf (PK) in Umfangsrichtung asymmetrisch zwischen den Polschuhen (250) angeordnet ist, wobei vorzugsweise ein in Umfangsrichtung gemessener Asymmetriewinkel (AW) zwischen einer senkrecht zu einer diametralen Verbindungslinie der Polschuhe (250) liegenden axialen Schnittebene (215) und dem Prüfkopf (PK) im Bereich von 5° bis 15° liegt.

8. Verwendung nach Anspruch 5, 6 oder 7, **dadurch gekennzeichnet, dass** der Prüfkopf (PK) ein Sonden-Array (SA) mit einer Vielzahl von magnetfeldempfindlichen Prüfsonden (PS) aufweist, welche in einer zur Durchlaufrichtung (130) parallelen Axialrichtung nebeneinander angeordnet sind und eine effektive Prüfkopflänge (PKL) definieren.

9. Verwendung nach einem der Ansprüche 5 bis 8, **dadurch gekennzeichnet, dass** der Polschuh (250) an beiden axialen Enden über die axialen Enden des Prüfkopfs (PK) hinaussteht, so dass ein beidseitiger axialer Überstand existiert, wobei vorzugsweise ein Verhältnis zwischen der axialen Polschullänge (L) und der Prüfkopflänge (PKL) im Bereich von 1,5 bis 3,0, vorzugsweise unterhalb von 2,5 liegt.

## Claims

1. Pole shoe (250) for use on a magnetizing device (200) for magnetizing a test volume of a test material (110) in a testing apparatus (100) for leakage flux testing of ferromagnetic test material with a substantially circular-cylindrical surface (115) for determining defects, in particular for testing ferromagnetic pipes,
wherein the testing apparatus comprises a testing head (120, PK) with at least one testing probe (PS) for scanning the surface of the test material for detecting magnetic leakage fields caused by defects and the magnetizing device (200) is designed to magnetize the test material in the region of the testing head (120, PK),
wherein the testing apparatus is designed for the testing apparatus and the test material to perform a relative movement parallel to a passage axis (130) in a test mode; wherein the pole shoe (250) has a pole shoe body (252) which consists of magnetically permeable material and on which a field exit surface (255) adapted to the surface (115) of the test material (110) is formed in such a way that, in a test configuration, the pole shoe (250) wraps around the test material (110) along an axial length (L) of the pole shoe measured parallel to the passage direction (130) over a wraparound angle (U) and an air gap (LS) remains between the field exit surface (255) and the surface of the test material,
**characterized in that**
the field exit surface (255) of the pole shoe (250) can be described as a detail of a rotationally symmetrical surface and has a non-concave cylindrical shape which differs from a concave cylindrical reference area (REF) in such a way that a radial distance (RFA) of the field exit surface from a curvature axis (KA) of the reference surface varies in the axial direction of the pole shoe, wherein the radial distance (RFA) of the field exit surface (255) from the curvature axis (KA) of the reference surface varies in the axial direction of the testing head (120, PK) in such a way that the radial distance (RFA) in a central region (MB) between axial end regions (EB) of the field exit surface is greater than in the axial end regions,
and/or **in that** the wraparound angle (U) varies in the axial direction of the pole shoe,
wherein the wraparound angle (U) in a central region (MB) between axial end regions (EB) of the field exit surface (255) is smaller than in the axial end regions (EB),
wherein, in the two axial end regions (EB), the field exit surface (255) is curved in a circular-cylindrical manner and coincides with the circular-cylindrical reference surface in each case.

2. Pole shoe according to Claim 1, **characterized in that** that the wraparound angle (U) varies between a minimum wraparound angle Uₘᵢₙ and a maximum wraparound angle Uₘₐₓ and a wraparound variation UV = Uₘₐₓ - Uₘᵢₙ is greater than 5° and/or less than 35°.

3. Pole shoe according to either of the preceding claims, **characterized in that** the radial distance RFA of the field exit surface (255) from the curvature axis (KA) of the reference surface varies between a minimum distance RFAₘᵢₙ and a maximum distance RFAₘₐₓ and a radii difference ΔRFA = RFAₘₐₓ - RFAₘᵢₙ is greater than 2 mm and/or less than 40 mm and/or **in that** the radii difference ΔRFA is between 5% and 40% of the minimum radius RFAₘᵢₙ.

4. Pole shoe according to any of the preceding claims, **characterized in that** the field exit surface (255) has a maximum wraparound angle Uₘₐₓ of more than 90°, wherein the maximum wraparound angle Uₘₐₓ is preferably in the range of from 100° to 160°, in particular in the range of from 115° to 140°.

5. Use of a pole shoe according to any of the preceding claims in a magnetizing device of a testing apparatus (100) for leakage flux testing of ferromagnetic test material (110) with a substantially circular-cylindrical surface (115), in particular of ferromagnetic pipes, for determining defects, wherein the testing apparatus is designed for the testing apparatus (100) and the test material (110) to perform a relative movement parallel to a passage axis (130) in a test mode, the testing apparatus comprising:
at least one testing head (120, PK) with at least one testing probe (PS) for scanning the surface of the test material (110) for detecting magnetic leakage fields caused by defects;
the magnetizing device (200) for magnetizing a test volume of the test material (110) in the region of the testing head (120, PK), wherein the magnetizing device (200) has pole shoes (250) oriented radially with respect to the test material surface,
wherein the pole shoe (250) has a pole shoe body (252) which consists of magnetically permeable material and on which a field exit surface (255) adapted to the surface of the test material (110) is formed in such a way that, in a test configuration, the pole shoe (250) wraps around the test material (110) along an axial length (L) measured parallel to the passage direction (130) over a wraparound angle (U) measured in the circumferential direction of the test material and an air gap (LS) remains between the field exit surface (255) and the surface of the test material.

6. Use according to Claim 5, **characterized by** a rotating head (240) which can be rotated around the test material (110) and has a magnetizing device (200) which has, at diametrically opposite points, pole shoes (250) which are oriented radially with respect to the surface (115) of the test material and have field exit surfaces (255) facing the test material (110).

7. Use according to Claim 5 or 6, **characterized in that** the pole shoes (250) are diametrically opposite to each other rotationally symmetrically with respect to the passage axis (130) and the testing head (PK) is arranged asymmetrically between the pole shoes (250) in the circumferential direction, wherein preferably an asymmetry angle (AW) measured in the circumferential direction between an axial sectional plane (215) situated perpendicular to a diametric connecting line of the pole shoes (250) and the testing head (PK) is in the range of from 5° to 15°.

8. Use according to Claim 5, 6 or 7, **characterized in that** the testing head (PK) has a probe array (SA) with a plurality of magnetic field-sensitive testing probes (PS), which are arranged side by side in an axial direction parallel to the passage direction (130) and define an effective testing head length (PKL).

9. Use according to any of Claims 5 to 8, **characterized in that** the pole shoe (250) extends beyond the axial ends of the testing head (PK) at both axial ends, so that there is a two-sided axial projection, wherein preferably a ratio between the axial pole shoe length (L) and the testing head length (PKL) is in the range of from 1.5 to 3.0, preferably below 2.5.

## Revendications

1. Pièce polaire (250) destinée à être utilisée sur un appareil de magnétisation (200) pour la magnétisation d'un volume de test d'un produit à tester (110) dans un dispositif de test (100) pour le test de flux de fuite d'un produit à tester ferromagnétique présentant une surface (115) sensiblement cylindrique circulaire, pour la détection de défauts, en particulier pour le test de tubes ferromagnétiques,
le dispositif de test présentant une tête de test (120, PK) pourvue d'au moins une sonde de test (PS) pour le balayage de la surface du produit à tester afin de détecter des champs de fuite magnétiques provoqués par des défauts et l'appareil de magnétisation (200) étant conçu pour générer une magnétisation du produit à tester dans la zone de la tête de test (120, PK),
le dispositif de test étant conçu pour que le dispositif de test et le produit de test effectuent, dans un fonctionnement de test, un déplacement relatif parallèle à un axe de passage (130) ;
la pièce polaire (250) présentant un corps (252) de pièce polaire constitué d'un matériau magnétiquement conducteur, sur lequel est réalisée une surface de sortie (255) du champ adaptée à la surface (115) du produit à tester (110), de telle sorte que, dans une configuration de test, la pièce polaire (250) entoure le produit à tester (110) le long d'une longueur axiale (L) mesurée parallèlement à la direction de passage (130) de la pièce polaire sur un angle d'enroulement (U) et qu'il reste une fente d'air (LS) entre la surface de sortie (255) du champ et la surface du produit à tester,
**caractérisée en ce que**
la surface de sortie (255) du champ de la pièce polaire (250) peut être décrite comme une coupe d'une surface à symétrie de rotation et présente une forme cylindrique non concave, qui s'écarte d'une surface de référence (REF) cylindrique concave de telle sorte qu'une distance radiale (RFA) entre la surface de sortie du champ et un axe de courbure (KA) de la surface de référence varie dans la direction axiale de la pièce polaire, la distance radiale (RFA) entre la surface de sortie (255) du champ et l'axe de courbure (KA) de la surface de référence variant dans la direction axiale de la tête de test (120, PK) de telle sorte que la distance radiale (RFA), dans une zone centrale (MB) entre les zones d'extrémité axiales (EB) de la surface de sortie du champ, est supérieure à celle dans les zones d'extrémité axiales,
et/ou **en ce que** l'angle d'enroulement (U) varie dans la direction axiale de la pièce polaire,
l'angle d'enroulement (U) dans une zone centrale (MB) entre les zones d'extrémité axiales (EB) de la surface de sortie (255) du champ étant inférieur à celui dans les zones d'extrémité axiales (EB),
la surface de sortie (255) du champ dans les deux zones d'extrémité axiales (EB) étant à chaque fois incurvée de manière cylindrique circulaire et coïncidant avec la surface de référence cylindrique circulaire.

2. Pièce polaire selon la revendication 1, **caractérisée en ce que** l'angle d'enroulement (U) varie entre un angle d'enroulement minimal Uₘᵢₙ et un angle d'enroulement maximal Uₘₐₓ et une variation d'enroulement UV = Uₘₐₓ - Uₘᵢₙ est supérieure à 5° et/ou inférieure à 35°.

3. Pièce polaire selon l'une des revendications précédentes, **caractérisée en ce que** la distance radiale RFA entre la surface de sortie (255) du champ et l'axe de courbure (KA) de la surface de référence varie entre une distance minimale RFAₘᵢₙ et une distance maximale RFAₘₐₓ et une différence de rayon ΔRFA = RFAₘₐₓ - RFAₘᵢₙ est supérieure à 2 mm et/ou inférieure à 40 mm et/ou **en ce que** la différence de rayon ΔRFA représente entre 5% et 40% du rayon minimal RFAₘᵢₙ.

4. Pièce polaire selon l'une des revendications précédentes, **caractérisée en ce que** la surface de sortie (255) du champ présente un angle d'enroulement maximal Uₘₐₓ supérieur à 90°, l'angle d'enroulement maximal Uₘₐₓ étant de préférence situé dans la plage de 100° à 160°, en particulier dans la plage de 115° à 140°.

5. Utilisation d'une pièce polaire selon l'une des revendications précédentes dans un appareil de magnétisation d'un dispositif de test (100) pour le test de flux de fuite d'un produit à tester (110) ferromagnétique présentant une surface (115) sensiblement cylindrique circulaire, en particulier de tubes ferromagnétiques, pour la détection de défauts, le dispositif de test étant conçu pour que le dispositif de test (100) et le produit à tester (110) effectuent, dans un fonctionnement de test, un déplacement relatif parallèle à un axe de passage (130), le dispositif de test comprenant :
au moins une tête de test (120, PK) pourvue d'au moins une sonde de test (PS) pour le balayage de la surface du produit à tester (110) afin de détecter des champs de fuite magnétiques provoqués par des défauts ;
l'appareil de magnétisation (200) pour la magnétisation d'un volume de test du produit à tester (110) dans la zone de la tête de test (120, PK), l'appareil de magnétisation (200) présentant des pièces polaires (250) orientées radialement par rapport à la surface du produit à tester,
la pièce polaire (250) présentant un corps (252) de pièce polaire constitué d'un matériau magnétiquement conducteur, sur lequel est réalisée une surface de sortie (255) du champ adaptée à la surface du produit à tester (110), de telle sorte que dans une configuration de test, la pièce polaire (250) entoure le produit à tester (110) le long d'une longueur axiale (L) mesurée parallèlement à la direction de passage (130) sur un angle d'enroulement (U) mesuré dans la direction périphérique du produit à tester et qu'il reste une fente d'air (LS) entre la surface de sortie (255) du champ et la surface du produit à tester.

6. Utilisation selon la revendication 5, **caractérisée par** une tête rotative (240) tournant autour du produit à tester (110), qui présente un appareil de magnétisation (200), qui présente en des endroits diamétralement opposés des pièces polaires (250) orientées radialement par rapport à la surface (115) du produit à tester, les surfaces de sortie (255) du champ étant à orienter vers le produit à tester (110).

7. Utilisation selon la revendication 5 ou 6, **caractérisée en ce que** les pièces polaires (250) sont situées l'une par rapport à l'autre de manière diamétralement opposée selon une symétrie de rotation par rapport à l'axe de passage (130) et la tête de test (PK) est agencée entre les pièces polaires (250) de manière asymétrique dans la direction périphérique, un angle d'asymétrie (AW) mesuré dans la direction périphérique entre un plan de coupe axial (215) situé perpendiculairement à une ligne de liaison diamétrale des pièces polaires (250) et la tête de test (PK) se situant de préférence dans la plage de 5° à 15°.

8. Utilisation selon la revendication 5, 6 ou 7, **caractérisée en ce que** la tête de test (PK) présente un réseau de sondes (SA) pourvu d'une multitude de sondes de test (PS) sensibles au champ magnétique, qui sont agencées les unes à côté des autres dans une direction axiale parallèle à la direction de passage (130) et qui définissent une longueur effective (PKL) de la tête de test.

9. Utilisation selon l'une des revendications 5 à 8, **caractérisée en ce que** la pièce polaire (250), au niveau des deux extrémités axiales, déborde des extrémités axiales de la tête de test (PK) de telle sorte qu'il existe un débordement axial des deux côtés, un rapport entre la longueur axiale (L) de la pièce polaire et la longueur (PKL) de la tête de test se situant de préférence dans la plage de 1,5 à 3,0 et étant de préférence inférieur à 2,5.
